# EUROPEAN PATENT APPLICATION

(11) **EP 2 221 221 A1**
(43) Date of publication of application: **25.08.2010**
(21) Application number: 08792682.0
(22) Date of filing: 25.08.2008
(51) Int. Cl.: B60R 16/02, B60K 35/00

(54) **DISPLAY CONTROL DEVICE, REPRODUCTION DEVICE, INFORMATION DISPLAY SYSTEM FOR MOBILE OBJECT, MODULE FOR DRIVER'S SEAT, AND MOBILE OBJECT**

(30) Priority: 20.11.2007 JP 2007300562
(71) Applicant: Sharp Kabushiki Kaisha, Osaka-shi Osaka 545-8522 (JP)
(72) Inventor: MASUI, Teruhisa, Abenu-ku, Osaka-shi Osaka 545-8522 (JP); FUJIMOTO, Fumiaki, saka 545-8522 (JP); FUJISAWA, Masayuki, Abenu-ku, Osaka-shi Osaka 545-8522 (JP); NISHIDA, Osamu, Abenu-ku, Osaka-shi Osaka 545-8522 (JP)
(74) Representative: Müller-Boré & Partner Patentanwälte
(86) International application number: PCT/JP2008/065074
(87) International publication number: WO 2009/066494

(57) **Abstract**

ADPF-ECU (1) includes a DPF controller (11) that generates a display identifier for displaying an information image in accordance with the situation of a mobile object on a liquid crystal display device (4) based on the state information acquired from the respective ECUs (3a) to (3d), a drawing controller (13) that generates a layout image showing a layout of the information image and an element image showing at least one of the state of each part of the mobile object based on the display identifier and causes the liquid crystal display device (4) to display the information image, and a write controller (17) that writes the display identifier in a log information storage part (18) as log information together with time information every time the displayed information image changes.

## Description

### Technical Field

The present invention relates to a display control device, a reproduction device, an information display system for a mobile object, a module for a driver's seat, and a mobile object for presenting an information image required for driving a mobile object such as an automobile and the like to a driver, using a dot matrix type display device.

### Background Art

Conventionally, on a dashboard of an automobile or the like, analog-type or counter-type meters, and indicator lamps using, for example, electric bulbs, LEDs, etc. have been used mostly. Further, for digital display or indicator display of numbers, a segmented liquid crystal display unit also has been used generally.

However, recently, a dot matrix type display device such as a liquid crystal panel display device also has come to be used on the dashboard of the automobile or the like. That is, at least a part of the dashboard is formed of a dot matrix type display device capable of displaying an arbitrary pattern, and meters such as a speed meter, various indicators, and the like are displayed as images.

Thus, the use of the dot matrix type display device for the dashboard of the automobile or the like allows the dashboard to have various display patterns. For example, the kinds of meters, indicators and the like to be displayed, and the arrangement or size thereof can be changed dynamically, if required (see, for example, JP 11(1999)-311545 A). Further, for example, it also becomes possible to display, side by side, images of meters together with images of scenes outside an automobile photographed by a CCD (Charge Coupled Device) photographing device or the like, images for navigation, etc., and thus, the images of meters and the images other than those of the dashboard can be combined to be displayed.

In recent automobiles, a number of ECUs (Electronic Control Units) are provided in each part of an automobile, and the ECUs are connected through an in-car LAN. Then, each ECU is capable of performing various information processing and controls based on the state information acquired from the other ECUs. An ECU that manages a drive system including an engine and a power transmission mechanism sends state information such as the rotation number of an engine, a driving speed, and a gear position to an ECU for image display controlling the display of a dashboard. Further, an ECU that manages a safety system contributing to the safety of an automobile sends, for example, state information on lighting states of lights, the open/close states of doors, the presence/absence of abnormality of an air bag, and the fastened states of seat belts. Further, an ECU that manages an amenity system contributing to the comfortableness inside an automobile sends state information such as the blowoff temperature from an air-conditioner and a room temperature to the ECU for image display.

In a conventional information display system for a mobile object, an ECU for image display generates an image in a predetermined form based on each of a plurality of kinds of state information sent from these plurality of ECUs so that a driver easily can recognize the state of each system instinctively. For example, in order to express a driving speed, the ECU for image display generates an image representing a conventional analog-type speed meter or an image displaying a speed as a numerical value. Further, in the case where there is a door that is not closed properly, the ECU for image display generates an image indicating that the door is open. In addition, the ECU for image display generates images representing various indicators such as a gear position indicator, a fuel remaining indicator, and a water thermometer of a radiator. Then, images generated respectively based on various kinds of information are overlaid, whereby one information image representing the entire dashboard for an automobile is generated to be displayed on a display device.

Further, in the conventional information display system for a mobile object, an ECU for log write acquires each of a plurality of kinds of state information sent from the plurality of ECUs, and writes each of the acquired state information, for example, in a log information storage part as log information. This allows the log information to be accumulated in the log information storage part. Therefore, for example, a failure diagnosis ECU can read the log information accumulated in the log information storage part, conduct diagnosis at all times based on the read log information, and notify a driver of an automobile of a maintenance period, a failure factor, and the like of the automobile. Further, the log information accumulated in the log information storage part is read by a personal computer of an automobile dealer, for example, via a failure diagnosis ECU, a network, or a recording medium, whereby the cause of the failure of the automobile can be specified in the automobile dealer. Further, the log information accumulated in the log information storage part is read by a personal computer of an automobile maker, for example, whereby the log information can be used for supporting design of automobiles in the automobile maker.

### Disclosure of Invention

### Problem to be Solved by the Invention

However, it is difficult to specify what information image has been displayed on a display device only with the log information formed of each of a plurality of kinds of state information sent from a plurality of ECUs.

In order to specify what information image has been displayed on the display device, it is conceivable to record a change in the information image displayed on the display device as a moving image in a recording device. However, according to this recording method, a moving image is recorded, and hence, even if it is digital data, the amount of information to be written in the log information storage part becomes enormous.

The present invention has been achieved in view of the above problems, and its object is to provide a display control device, a reproduction device, an information display system for a mobile object, a module for a driver's seat, and a mobile object capable of specifying what information image has been displayed on a display device easily while suppressing the amount of information to be written in a log information storage part.

### Means for Solving Problem

In order to achieve the above object, a display control device of the present invention connected to a dot matrix type display device, includes: a state information acquiring part that acquires state information indicating a state of each part of a mobile object at a predetermined period from each part of the mobile object; an intermediate information generating part that generates intermediate information for displaying an information image in accordance with a situation of the mobile object on the display device based on the state information acquired by the state information acquiring part; an image generating part that generates a layout image showing a layout of the information image and an element image showing at least one of the state of each part of the mobile object based on the intermediate information generated by the intermediate information generating part, combines the generated layout image with the generated element image to generate the information image, and causes the display device to display the generated information image; and a write control part that writes the intermediate information in a log information storage part as log information together with time information indicating a time at which the information image has changed, every time the information image displayed on the display device changes.

According to the display control device of the present invention, every time the information image displayed on the display device changes, the write control part writes the intermediate information in the log information storage part as the log information together with the time information indicating a time at which the information image has changed. Thus, the log information is accumulated in the log information storage part. More specifically, the state information indicating the state of each part of a mobile object is not accumulated as log information in the log information storage part, and intermediate information for displaying an information image in accordance with the situation of the mobile object is accumulated as log information in the display device. Therefore, the past information image displayed on the display device can be reproduced by reading the log information accumulated in the log information storage part. Consequently, what information image has been displayed on the display device can be specified easily. Further, every time the information image displayed on the display device changes, the write control part writes intermediate information in the log information storage part as log information together with the time information. Therefore, compared with the case where a change in the information image displayed on the display device is recorded as a moving image in the recording device, the amount of information to be written in the log information storage part can be suppressed.

The log information storage part may be formed on a storage device in the display control device or may be formed on a recording medium attachable/detachable with respect to the display control device. Further, the log information storage part may be formed on a storage device in a web server or a file server on the Internet. That is, as long as the write control part of the display control device can write the log information in the log information storage part by accessing the log information storage part, there is no particular limit to a place where the log information storage part is formed.

In the display control device of the present invention, it is preferred that the intermediate information contains a layout identifier specifying the layout image and an element image identifier specifying a display form of the element image, and the write control part writes at least one of the layout identifier and the element image identifier in the log information storage part as log information.

According to the above configuration, the write control part writes at least one of the layout identifier and the element image identifier in the log information storage part as log information. More specifically, when the write control part writes the layout identifier in the log information storage part as log information, the layout image of the past information image displayed on the display device can be reproduced. Further, when the write control part writes the element image identifier in the log information storage part as log information, the element image of the past information image displayed on the display device can be reproduced. Thus, the write control part can write at least one of the layout identifier and the element image identifier in the log information storage part as log information in accordance with the purpose for reproduction.

In the display control device of the present invention, it is preferred that the log information storage part includes a particular region in which, after the write control part once writes log information, the write control part cannot write the log information again, and a usual region in which the write control part can write log information repeatedly, and the write control part writes the layout identifier in the particular region and the element image identifier in the particular region or the usual region.

According to the above configuration, the write control part writes the layout identifier in the particular region. The particular region is one region of the storage region in the log information storage part, in which the write control part cannot write log information again after the write control part once writes log information. More specifically, the particular region is a region in which the write control part can write log information only once. Thus, the layout identifier written in the particular region is not overwritten (updated) by the write control part. That is, the layout identifier is an identifier specifying the basic configuration of the information image, and hence, the write control part can prevent the written layout identifier from being overwritten by writing the layout identifier in the particular region. On the other hand, the write control part writes the element image identifier in the particular region or the usual region. The usual region is one region of the storage region in the log information storage part, in which the write control part can write log information repeatedly. Specifically, the usual region has a so-called ring buffer structure in which the write control portion writes log information successively from a head address and when completing the write of the log information to the end address, write control part can return to the head address to continue to write log information. That is, if the importance of the element image is high, the write control part writes, for example, the element image identifier in the particular region. Further, the importance of the element image is low, the write control part writes, for example, the element image identifier in the usual region. More specifically, the write control part can write the element image identifier in the particular region or the usual region in accordance with the importance of the element image.

In the display control device of the present invention, it is preferred that the image generating part acquires moving image data from a image pickup device provided in the mobile object or a reproduction device provided in the mobile object and causes the display device to display a moving image based on the acquired moving image data, and the write control part captures the moving image displayed on the display device as a still image at an every predetermined time interval, and writes the captured still image in the log information storage part as log information together with time information indicating a time at which the still image has been captured.

According to the above configuration, the write control part captures the moving image displayed on the display device as a still image at an every predetermined time interval. The write control part writes the captured still image in the log information storage part as log information together with time information indicating a time at which the still image has been captured. Consequently, the still image obtained by capturing the moving image is accumulated in the log information storage part as log information.

It is preferred that the display control device of the present invention further is connected to an input device and further includes a read control part that reads a part or an entirety of the log information accumulated in the log information storage part in accordance with an instruction from the input device, and the image generating part causes the display device to reproduce the information image based on the part or the entirety of the log information read by the read control part.

According to the above configuration, the read control part reads a part or an entirety of the log information accumulated in the log information storage part in accordance with an instruction from the input device. For example, if the instruction from the input device indicates a read from a certain time, the read control part reads the log information corresponding to the time after the certain time from the log information storage part. Further, for example, the instruction from the input device indicates the read of a part of the log information, the read control part reads the part of the log information from the log information storage p art. The image generating part causes the display device to reproduce the information image based on the part or the entirety of the log information read by the read control part. Thus, the information image desired by an administrator of the display control device can be reproduced on the display device.

Further, in order to achieve the above object, a reproduction device of the present invention includes an input part and a display part and reproduces an image on the display part in accordance with an instruction from the input part. The reproduction device includes: a log information acquiring part that acquires a part or an entirety of the log information accumulated in the log information storage part according to any one of claims 1 to 4 in accordance with an instruction from the input part; and an image reproducing part that causes the display part to reproduce the information image based on the part or the entirety of the log information acquired by the log information acquiring part.

According to the reproduction device of the present invention, the log information acquiring part acquires a part or an entirety of the log information accumulated in the log information storage part of the display control device in accordance with the instruction from the input part. For example, if the instruction from the input part indicates a read from a certain time, the log information acquiring part acquires the log information corresponding to the time after the certain time. Further, for example, the instruction from the input device indicates the read of a part of the log information, the log information acquiring part acquires the part of the log information. The image reproducing part causes the display part to reproduce the information image based on the part or the entirety of the log information acquired by the log information acquiring part. Thus, the information image desired by an administrator of the reproduction device can be reproduced on the display device.

Further, in order to achieve the above object, an information display system for a mobile object of the present invention includes: the display control device according to the present invention; and a display device that displays an information image generated by the image generating part of the display control device. Further, in the display device, it is preferred that the display device is a liquid crystal display device.

Further, in order to achieve the above object, a module for a driver's seat in the present invention is a module for a driver's seat to be attached to a periphery of a driver's seat of a mobile object, and includes the information display system for a mobile object according to the present invention.

Further, in order to achieve the above object, a mobile object of the present invention includes the information display system for a mobile object according to the present invention, wherein the display device is attached to a position recognizable visually at least from the driver's seat. Further, it is preferred that, in the case where the mobile object is an automobile, the state information is transmitted from an ECU provided in each part of the automobile and collected in the display control device via an in-car network.

### Effects of the Invention

As described above, a display control device, a reproduction device, an information display system for a mobile object, a module for a driver's seat, and a mobile object of the present invention can specify what information image has been displayed on a display device easily while suppressing the amount of information to be written in a log information storage part.

### Brief Description of Drawings

[FIG. 1] FIG. 1 is a block diagram showing an example of a functional configuration of an information display system for a mobile object according to the present embodiment.
[FIG. 2] FIG. 2 is a front view showing an external appearance of a cockpit module for an automobile with the information display system for a mobile object incorporated therein.
[FIG. 3] FIGS. 3A and 3B respectively are diagrams showing examples of a layout specified by a MEN.
[FIG. 4] FIGS. 4A and 4B respectively are diagrams showing display exampled of a liquid crystal display device in the case where values of a SEN, a ROTATE, and a MOTION different from each other are given to the layout in FIG. 3A
[FIG. 5] FIG. 5 is a diagram showing an example of a memory region of a log information storage part.
[FIG. 6] FIG. 6 is a diagram showing an example of data in a particular region in the case where the values of the MEN are written together with time information in the particular region with a write controller.
[FIG. 7] FIG. 7 is a diagram showing an example of data in the particular region and the usual region in the case where the values of the SEN are written together with time information in the particular region and the usual region with the write controller.
[FIG. 8] FIG. 8 is a diagram showing an example of data in the usual region in the case where values of the ROTATE are written together with time information in the usual region with the write controller.
[FIG. 9] FIG. 9 is a diagram showing an example of data in the usual region in the case where values of the MOTION are written together with time information in the usual region with the write controller.
[FIG. 10] FIG. 10 is a diagram showing an example of data in the usual region in the case where a still image is written together with time information in the usual region with the write controller.
[FIG. 11] FIG. 11 is a flowchart showing an operation example of the information display system for a mobile object in the case where state information is acquired via an in-car LAN.
[FIG. 12] FIG. 12 is a flowchart showing an operation example of the information display system for a mobile object in the case where a read instruction is given by an input device.
[FIG. 13] FIG. 13 is a block diagram showing an example of a functional configuration of an information display system for a mobile object according to Modified Example 1.
[FIG. 14] FIG. 14 is a block diagram showing an example of a functional configuration of an information display system for a mobile object according to Modified Example 2.
[FIG. 15] FIG. 15 is a block diagram showing an example of a functional configuration of a reproduction device.

### Description of the Invention

Hereinafter, one embodiment of the present invention in the case where the present invention is applied to an automobile (passenger car) will be described specifically with reference to the drawings. A target to which the present invention is applied is not limited to an automobile. The present invention also is applicable to various vehicles (movement means or transportation means) such as an automatic two-wheel vehicle, an automatic three-wheel vehicle, a special vehicle, a railroad vehicle, other road vehicles, an amtrac, an airplane, or a ship, in addition to an automobile. Further, the present invention also is applicable to a simulator that allows a user to experience the driving of the above-described various vehicles pseudomonically without being limited to vehicles, the main purposes of which are the movement or transformation as described above. In the present invention, the vehicles, simulators, and the like as described above will be referred to as a "mobile object" collectively.

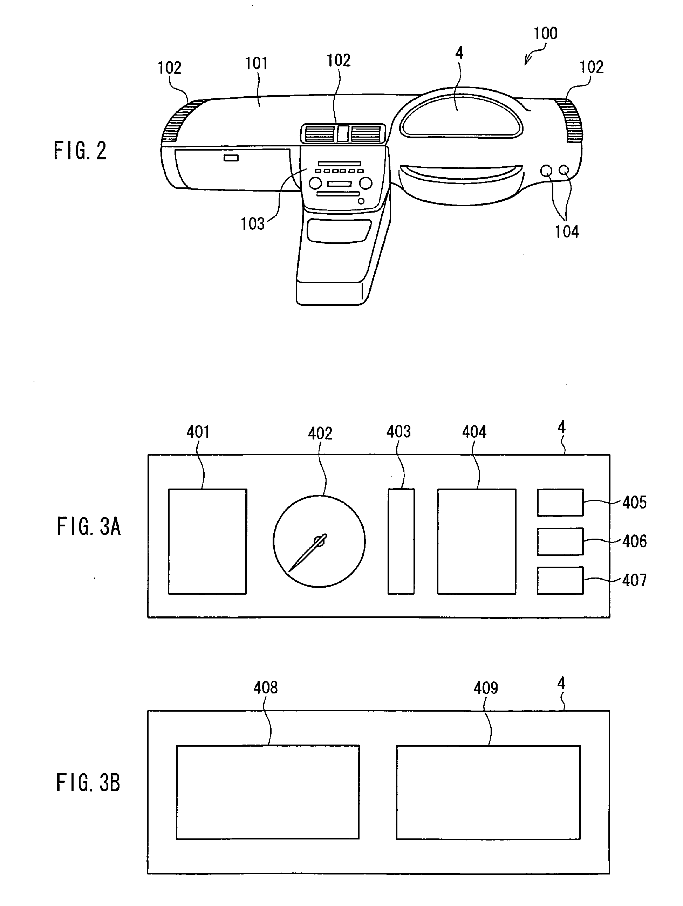

FIG. 2 is a front view showing an external appearance of a cockpit module (module for a driver's seat) for an automobile in which an information display system for a mobile object according to the present embodiment is incorporated. As shown in FIG. 2, a cockpit module 100 for an automobile according to the present embodiment includes a liquid crystal display device 4 displaying an information image of a dashboard for an automobile, in place of a conventional dashboard for an automobile including a conventional analog meter such as a speed meter and a tachometer, an indicator lamp formed of, for example, LEDs, and the like.

The liquid crystal display device 4 is not a segmented liquid crystal display unit used mostly even in conventional automobiles, but a dot matrix type liquid crystal display device. The liquid crystal display device 4 is capable of displaying an image with an arbitrary pattern, and hence, functions as an information display device for an automobile by displaying an information image acquired by combining various element images of various meters, an indicator lamp, and the like. The liquid crystal display device 4 can display not only an information image of a dashboard, but also a moving image. Examples of the moving image include an image photographed by a car-mounted camera set at the back of or on the side of an automobile, a navigation image, a received image of television broadcast or a reproduced image of a car-mounted DVD player, or the like.

The liquid crystal display device 4 is attached to an instrument panel 101 that is a frame of the cockpit module 100 for an automobile so as to be positioned on a back side of a steering wheel (not shown). The cockpit module 100 for an automobile includes an air-conditioning unit (not shown), an air-conditioning duct 102 for introducing air from the air-conditioning unit into an automobile, an audio module 103, a lamp switch 104, a steering mechanism (not shown), an air bag module (not shown) and the like, in addition to the liquid crystal display device 4.

The configuration of the cockpit module 100 for an automobile shown in FIG. 2 is shown merely for an illustrative purpose, and the embodiment of the present invention is not limited thereto. For example, in the example shown in FIG. 2, although the liquid crystal display device 4 is placed so as to be opposed to a driver, the present invention is not limited thereto, and the liquid crystal display device 4 may be placed in a center portion of the instrument panel 101, i.e., between a driver's seat and a passenger's seat.

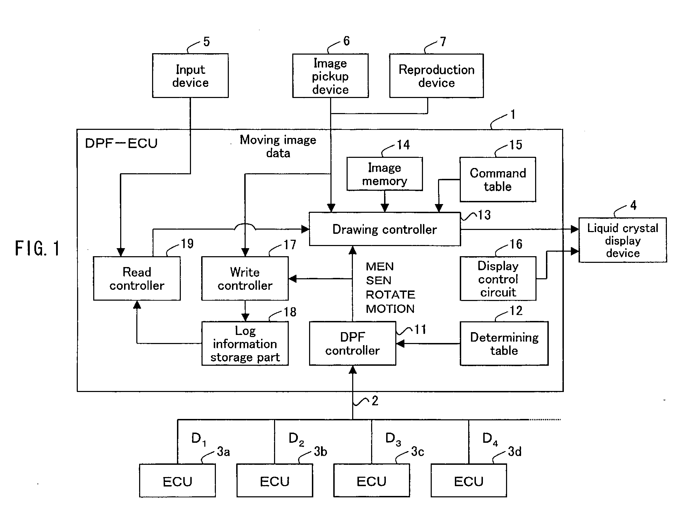

FIG. 1 is a block diagram showing an example of a functional configuration of an information display system for a mobile object according to the present embodiment. A DPF (Display Platform)-ECU 1 shown in FIG. 1 is connected to various ECUs 3a, 3b, 3c, 3d, ... provided in each part of an automobile via an in-car LAN 2. As an interface of the in-car LAN 2 according to the present embodiment, a CAN (Control Area Network) widely adopted mainly in Europe is adopted. However, the interface specification of the in-car LAN to which the present invention is applicable is not limited to the CAN. For example, any car-mounted network in accordance with various in-car LAN interface specifications such as a LIN (Local Interconnect Network), a MOST (Media Oriented Systems Transport), or a FlexRay can be applied to the present invention.

Furthermore, the DPF-ECU1 further is connected to the liquid crystal display device 4, an input device 5, a photographing device 6, and a reproduction device 7. The liquid crystal display device 4 displays an information image or a moving image generated by the DPF-ECU1. The input device 5 is composed of, for example, an operation switch, an operation button, an operation key, a speech recognition device, and the like. The photographing device 6 is composed of, for example, a car-mounted camera such as a CCD. The reproduction device 7 is composed of, for example, a navigation device provided in an automobile, a device capable of reproducing a received image of television broadcast, a car-mounted DVD player, or the like.

The DPF-ECU (display control device) 1 includes a DPF controller 11, a determining table 12, a drawing controller 13, an image memory 14, a command table 15, and a display control circuit 16. Herein, the DPF controller 11 is one embodiment of a state information acquiring part according to the present invention. Further, the DPF controller 11 and the determining table 12 are one embodiment of an intermediate information generating part according to the present invention. Further, the drawing controller 13 is one embodiment of an image generating part according to the present invention.

Although FIG. 1 shows the inner configuration of the DPF-ECU 1 as a functional block, various embodiments are considered as a mounting embodiment of each block on hardware. For example, all the functional blocks shown in FIG. 1 may be mounted on one circuit board, or the functional blocks shown in FIG. 1 also may be mounted, for example, under the condition of being divided into a plurality of semiconductor integrated circuits. In the case of the latter, for example, the DPF controller 11 and the determining table 12 also can be formed of a semiconductor integrated circuit independent from the other functional blocks.

The DPF controller 11 is a microcomputer that controls the entire operation of the DPF-ECU1. The DPF controller 11 acquires state information D1-D4 ... (hereinafter, referred to as state information D collectively unless required particularly) indicating the state of each part of the automobile from the ECUs 3a, 3b, 3c, 3d, ...via the in-car LAN 2 at a predetermined period. The "predetermined period" is set at an arbitrary length in accordance with the specifications of the in-car LAN 2 and the like. Further, the transmission periods of the state information D1-D4 ... from the respective ECUs may be different from each other. In this case, the sampling periods of the state information D 1 to D4 in the DPF controller 11 may be adjusted to the transmission periods of the respective pieces of state information.

The "state information D" refers to the information indicating the state of each part of an automobile, as described above, and may include various pieces of information such as information (for example, a fuel remaining amount, a room temperature, etc.) concerning the state not related directly to the mechanical operation of each part, in addition to the information (for example, a driving speed, an engine rotation number, etc.) concerning the mechanical operation state of each part of an automobile. As the state information D, these pieces of information merely are examples in the case of a passenger car. Examples of the state information include, but are not limited to, the rotation number of an engine, a driving speed, a selection position, a shift position, the activation state of a direction indicator, the lighting states of lights, the open/close state of a door and a trunk, the state of door locking, the state of a tire, the presence/absence of abnormality of an air bag, the fastened state of a seat belt, the blowoff temperature from an air-conditioner, a room temperature, an outside temperature, the state of a car-mountedAV appliance, the setting of an automatic operation function, the activation state of a wiper, a fuel remaining amount, a battery remaining amount, the dependence degree (in the case of a hybrid car) between an engine and a battery, an oil remaining amount, a radiator temperature, and an engine temperature.

The DPF controller 11 matches the acquired state information D with the determining table 12, thereby generating a display identifier (intermediate information) specifying what information image should be generated in accordance with the state of an automobile at that time. In the present embodiment, the display identifier includes four numbers: a MEN (main event number), a SEN (sub event number), a ROTATE (port number, angle information), and a MOTION (port number, still image number). The DPF controller 11 outputs the generated display identifier to the drawing controller 13. The display identifier generated by the DPF controller 11 will be described later in detail.

The drawing controller 13 generates an information image to be displayed on the liquid crystal display device 4, referring to the image memory 14 and the command table 15, based on the display identifier given by the DPF controller 11. Specifically, the drawing controller 13 generates a layout image showing a layout of an information image and an element image showing at least one of the state of each part of an automobile based on the display identifier given by the DPF controller 11. The drawing controller 13 generates an information image by combining the element image generated with the generated layout image. The drawing controller 13 displays the generated information image on the liquid crystal display device 4.

In the image memory 14, a plurality of layout images and element images are recorded. In the command table 15, a read command for reading the layout images and the element images recorded on the image memory 14, a command for scaling-up or scaling-down the element images, a command for specifying the rotation angle of the element images, a command for transferring an image to each plane of an overlay image, and the like are registered.

Further, the drawing controller 13 also can acquire moving image data from at least one of the image pickup device 5 and the reproduction device 6. Thus, the drawing controller 13 also can incorporate a moving image into an information image, if required.

The display control circuit 16 includes various circuits controlling the display of the liquid crystal display device 4, such as a power supply circuit, a grayscale voltage generating circuit, and various driver driving circuits of the liquid crystal display device 4, and a backlight control circuit. It should be noted that the driver driving circuit and the like may be formed on a liquid crystal panel of the liquid crystal display device 4.

The determining table 12 is used for determining the MEN, SEN, ROTATE, and MOTION that are display identifiers, based on the state information D acquired from the ECUs 3a, 3b, 3c, 3d, ... via the in-car LAN 2.

Herein, the display identifier will be described in detail. The MEN is a layout identifier for specifying a layout of an information image to be displayed on the liquid crystal display device 4. On the other hand, the SEN, ROTATE, and MOTION are element image identifiers for specifying a display form of each element image in the layout specified by the MEN. Values of the MEN, SEN, ROTATE, and MOTION are defined in the determining table 12 in accordance with various values that can be taken by the state information D. The DPF controller 11 matches the acquired state information D with the determining table 12 every time acquiring the state information D from the in-car LAN 2, thereby determining the values of the MEN, SEN, ROTATE, and MOTION in accordance with the state information D, and outputs them to the drawing controller 13.

Each layout specified by the MEN defines what element image should be displayed in which portion of the display screen of the liquid crystal display device 4. In the information display system for a mobile object in the present embodiment, values of the MEN different from each other are defined with respect to various situations determined from the content of the state information D, whereby a suitable information image in accordance with the situation of an automobile at that time can be displayed.

For example, when an automobile is being driven, it is necessary to display a speed meter and a tachometer. However, when an automobile is at a standstill with an engine stopped, it is not necessary to display these meters, and a navigation image and the like are rather required in most cases. Thus, in the former, for example, a layout displaying meters such as a speed meter and a tachometer is used, whereas in the latter, it is preferred to use a layout in which a region for displaying a navigation image and the like is kept large without displaying meters. Further, for example, in the case of a vehicle type in which carmounted cameras capable of photographing the state of the outside of an automobile are provided at the back of and on the side of the automobile, it is preferred to use a layout including a display region of an image photographed by these cameras in the case of reverse driving or parallel parking. Thus, the information display system for a mobile object in the present embodiment determines the state of the automobile at that time from the state information D and displays the information image on the liquid crystal display device 4 using the layout suitable for the state of the automobile at that time, thereby providing required information to a driver so that the driver can see it easily.

Herein, FIGS. 3A and 3B show two specific examples of a layout of an information image to be displayed on the liquid crystal display device 4. In the layout shown in FIG. 3A, a region 401 for displaying a navigation image, a region 402 for displaying an image of a speed meter, a region 403 for displaying an image of a gear indicator, a region 404 for displaying a motion image for checking the safety of the automobile, and regions 405 to 407 for displaying images of various warning lights are defined. Further, in the layout shown in FIG. 3B, a region 408 for displaying a navigation image and a region 409 for displaying a video photographed by a car-mounted camera provided at the back of an automobile are defined. The layouts shown in FIGS. 3A and 3B are assigned MENs having values different from each other. For example, the layout shown in FIG. 3A is used during normal driving, and the layout shown in FIG. 3B is used when a gear is shifted to R (reverse driving). The layouts shown in FIGS. 3A and 3B merely are examples.

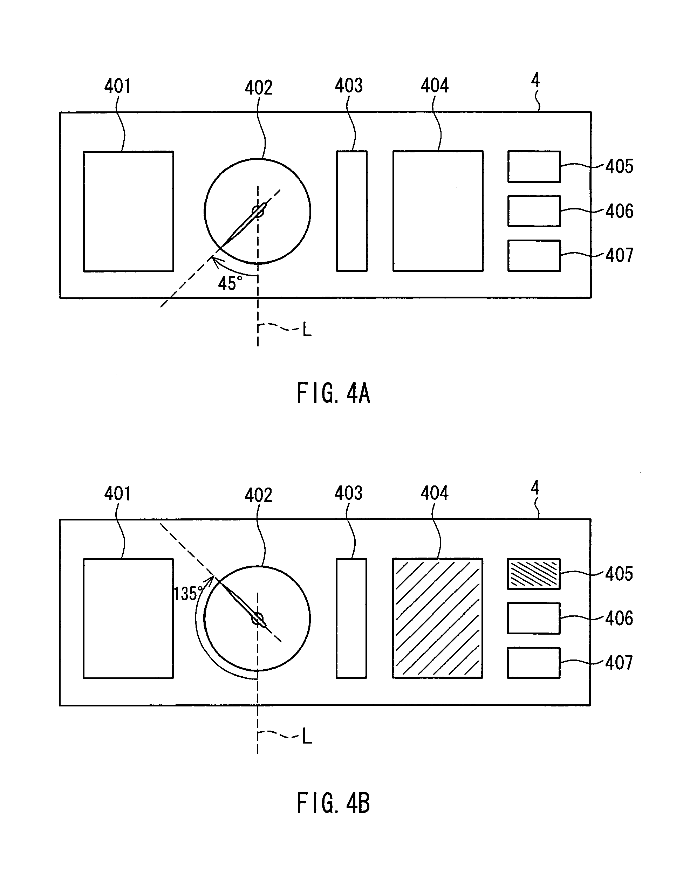

A SEN, a ROTATE, and a MOTION are defined as identifiers for specifying the display forms of element images to be displayed in each region of a layout with respect to the layout specified by the MEN as described above. FIGS. 4A and 4B show display examples of the liquid crystal display device 4 in the case where values of the SEN, ROTATE, and MOTION different from each other are given with respect to the layout in FIG. 3A. For example, in the region 405 shown in FIGS. 4A and 4B, it is assumed that an image of a door warning light for warning that a door of an automobile is opened is defined. Further, it is assumed that the value of the SEN being "101" corresponds to the display form in which the image of the door warning light is not lit, and the value of the SEN being "102" corresponds to the display form in which the image of the door warning light is lit. In such a case, if the value of the SEN output from the DPF controller 11 is "101", the image of the door warning light defined in the region 405 is not lit as shown in FIG. 4A On the other hand, if the value of the SEN output from the DPF controller is "102", the image of the door warning light defined in the region 405 is lit as shown in FIG. 4B.

Further, in the region 402 shown in FIGS. 4A and 4B, an image of the speed meter is defined. Herein, for example, it is assumed that a port No. specifying an image of a needle of the speed meter defined in the region 402 is "1", and the angle of the image of the needle of the speed meter is defined as an angle rotated clockwise from an auxiliary line L shown in FIG. 4. In such a case, if the value of the ROTATE output from the DPF controller 11 indicates the port No. "1" and the angle information "45", the image of the needle of the speed meter defined in the region 402 is displayed at the position of 45° from the auxiliary line L, as shown in FIG. 4A. On the other hand, if the value of the ROTATE output from the DPF controller 11 indicates the port No. "1" and the angle information "135", the image of the needle of the speed meter defined in the region 402 is displayed at the position of 135° from the auxiliary line L, as shown in FIG. 4B.

Further, in the region 404 shown in FIGS. 4A and 4B, a region for displaying a motion image for checking the safety of an automobile is defined. Herein, it is assumed that the port No. specifying the region 404 is defined as "1". In such a case, if the value of the MOTION output from the DPF controller 11 indicates the port No. "1" and still image Nos. "1" to "12" continuously, still images 1 to 12 corresponding to the still image Nos. "1" to "12" are displayed successively in the region 404 as motion images, as shown in FIG. 4B.

Thus, by defining a plurality of values of the SEN, ROTATE, and MOTION with respect to a layout specified with one MEN, the display forms of element images in the layout can be varied.

Further, the DPF-ECU 1 has a function of writing the display identifier output from the DPF controller 11 in a storage device in the DPF-ECU 1 as log information. Therefore, the DPF-ECU 1 further includes a write controller 17 and a log information storage part 18. Herein, the write controller 17 is one embodiment of a write control part according to the present invention.

The write controller 17 writes the display identifier output from the DPF controller 11 in the log information storage part 18 as log information together with time information indicating a changed time, every time the information image displayed on the liquid crystal display device 4 changes. Further, the write controller 17 also can capture a moving image displayed on the liquid crystal display device 4 as a still image at an every predetermined time interval, when the moving image is displayed on the liquid crystal display device 4 by the drawing controller 13. Specifically, the write controller 17 acquires moving image data from at least one of the image pickup device 5 and the reproduction device 6, and captures the acquired moving image data at an every predetermined time interval, thereby capturing the moving image data as the still image data. The write controller 17 writes the captured still image data in the log information storage part 18 as log information together with time information indicating a time at which the still image data is captured.

The write controller 17 writes the log information in the log information storage part 18, whereby the log information is accumulated in the log information storage part 18. The log information storage part 18 is composed of, for example, a non-volatile memory in the DPF-ECU 1. It should be noted that the log information storage part 18 may be composed of a car-mounted HDD outside the DPF-ECU 1.

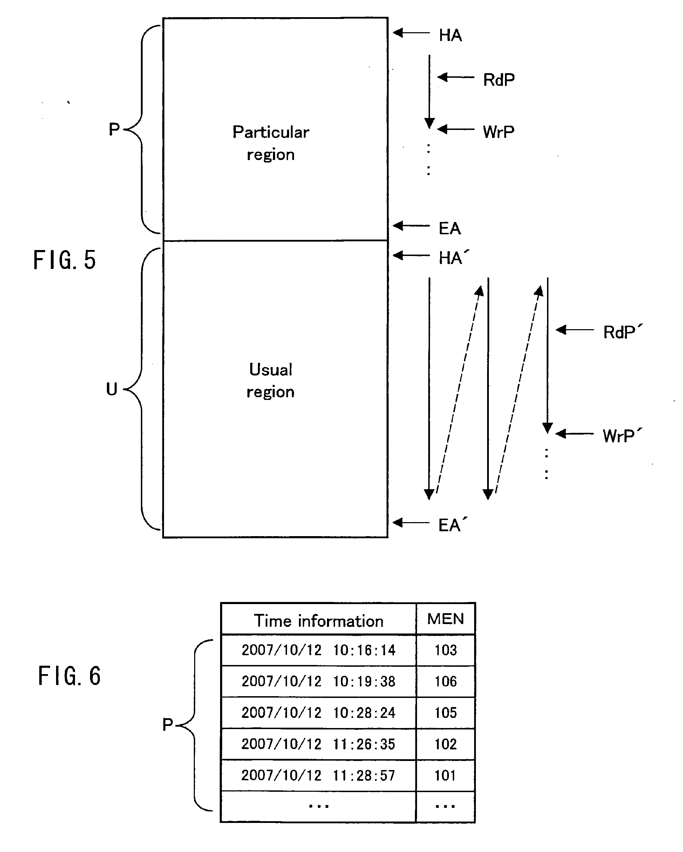

FIG. 5 is a diagram showing an example of a storage region of the log information storage part 18 according to the present embodiment. As shown in FIG. 5, the log information storage part 18 includes a particular region P and a usual region U as the storage region. The particular region P is one region of the storage region of the log information storage part 18, and includes a region extending from a head address HA to an end address EA The write controller 17 controls the write pointer WrP in the particular region P, thereby writing log information at an address indicated by the write pointer WrP The usual region U is one region of the storage region of the log information storage part 18, and includes a region from a head address HA to an end address EA'. The write controller 17 controls a write pointer WrP' in the usual region U, thereby writing log information at an address indicated by the write pointer WrP'.

In the present embodiment, the particular region P is a region in which the write controller 17 cannot write log information again after the write controller 17 once writes log information. More specifically, the particular region P is a region in which the write controller 17 can write log information only once. Specifically; the write controller 17 controls the write pointer WrP to write log information successively from the head address HA, and when completing the write of the log information to the end address EA, the write controller 17 completes the write to the particular region P without allowing the write pointer WrP to return to the head address HA. Consequently, the log information written in the particular region P is not overwritten (updated) by the write controller 17. On the other hand, the usual region U is a region in which the write controller 17 can write log information repeatedly. Specifically, the usual region U has a so-called ring buffer structure in which the write controller 17 controls the write pointer WrP' to write log information successively from the head address HA', and when completing the write of the log information to the end address EA', the write controller 17 allows the write pointer WrP'to return to the head address HA' to continue the write of the log information. Consequently, the log information written in the usual region U is overwritten (updated) by the write controller 17.

In the present embodiment, every time a layout image of an information image displayed on the liquid crystal display device 4 changes, the write controller 17 writes the value of a MEN output from the DPF controller 11 in the particular region P as log information together with time information indicating a time at which the layout image has changed. FIG. 6 shows an example of data in the particular region P when the value of the MEN is written in the particular region P by the write controller 17 together with the time information. As shown in FIG. 6, in the particular region P, values [103], [106], [105], [102], and [101] of the MEN are recorded together with the time information.

Herein, in the present embodiment, it is assumed that the value "103" of the MEN indicates a "start-up screen", the value "106" of the MEN indicates a "driving scree", the value "105" of the MEN indicates a "navigation screen", the value "102" of the MEN indicates an "infrared sensor warning screen", and the value "101" of the MEN indicates a layout of an "engine stop screen". That is, the example in FIG. 6 shows that the "start-up screen" is displayed on the liquid crystal display device 4 at 10:16:14 on October 12, 2007, and the "start-up screen" is switched to the "driving screen" at 10:19:38. The example also shows that the "driving screen" is switched to the "navigation screen" at 10:28:24, and that the "navigation screen" is switched to the "infrared sensor warning screen" at 11:26:35. Further, the example shows that the "infrared sensor warning screen" is switched to the "engine strop screen" at 11:28:57.

Thus, the write controller 17 writes the value of the MEN output from the DPF controller 11 in the particular region P, and hence, the value of the MEN written in the particular region P will not be overwritten (updated) by the write controller 17. That is, since the value of the MEN is an identifier specifying the basic configuration of an information image, the write controller 17 writes the value of the MEN in the particular region P, thereby preventing the written value of the MEN from being overwritten. The write controller 17 may write the value of the MEN output from the DPF controller 11 in the usual region U.

Further, every time an element image of the information image displayed on the liquid crystal display device 4 changes, the write controller 17 writes the value of a SEN output from the DPF controller 11 in the particular region P or the usual region U as log information together with the time information indicating a time at which the element image has changed. In the present embodiment, the write controller 17 writes the value of the SEN for specifying the display form of an element image with high importance in the particular region P. Herein, the element image with high importance refers to, for example, an image showing an engine-related failure such as oil leakage or brake abnormality, an image showing a failure related to a body such as an air bag or a door, etc. On the other hand, the write controller 17 writes the value of the SEN for specifying the display form of an element image with low importance in the usual region U. Herein, the element image with low importance refers to, for example, an image showing the position of a shift lever, an image showing operation information with respect to a navigation device, etc.

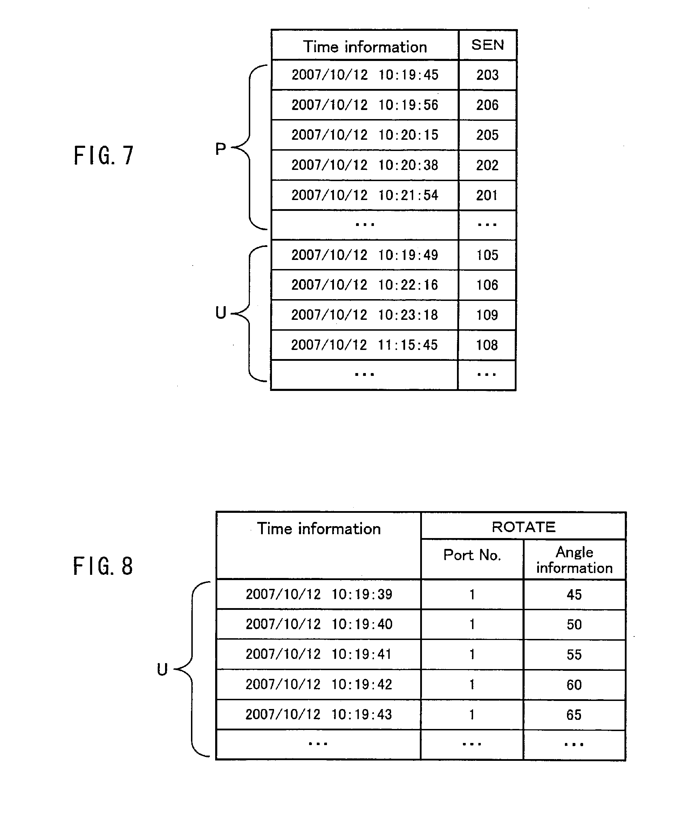

FIG. 7 shows an example of data in the particular region P and the usual region U when the value of the SEN is written in the particular region P and the usual region U together with the time information by the write controller 17. As shown in FIG. 7, the values "203", "206", "205", "202", and "201" of the SEN are recorded in the particular region P together with the time information. Further, the values "105", "106", "109", and "108" are recorded in the usual region U together with the time information.

Further, every time an element image of the information image displayed on the liquid crystal display device 4 changes, the write controller 17 writes the value of a ROTATE output from the DPF controller 11 in the particular region P or the usual region U as log information together with the time information indicating a time at which the element image has changed. In the present embodiment, the write controller 17 writes the value of the ROTATE in the usual region U. FIG. 8 shows an example of data of the usual region U when the value of the ROTATE is written in the usual region U by the write controller 17 together with the time information. As shown in FIG. 8, a port No. "1" is recorded as the value of the ROTATE. Further, angle information "45", "50", "55", "60", and "65" are recorded in the usual region U as the values of the ROTATE together with time information. The port No. of the ROTATE is a number specifying an image of a needle to be a target for the rotation based on the angle information.

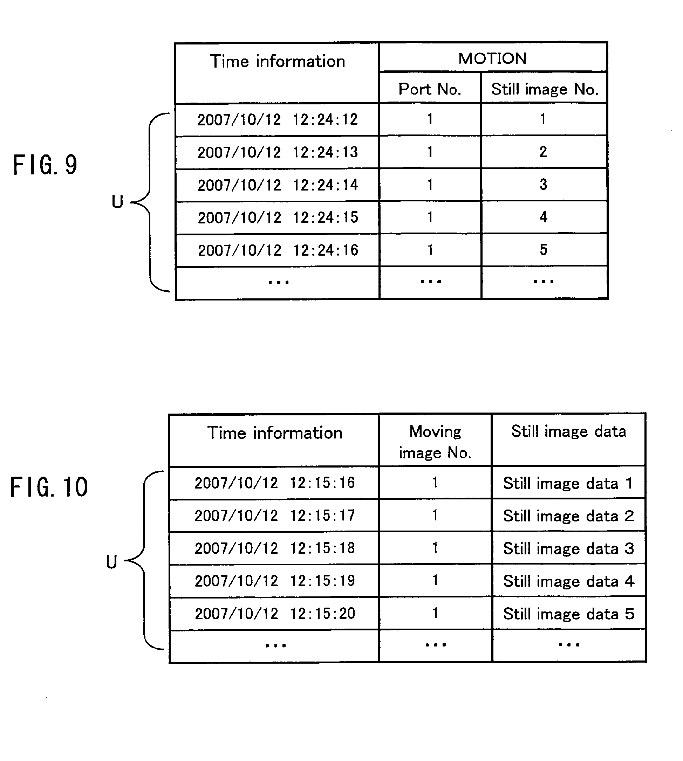

Further, every time an element image of the information image displayed on the liquid crystal display device 4 changes, the write controller 17 writes the value of the MOTOIN output from the DPF controller 11 in the particular region P or the usual region U as log information together with the time information indicating a time at which the element image has changed. In the present embodiment, the write controller 17 writes the value of the MOTION in the usual region U. FIG. 9 shows an example of the data in the usual region U when the value of the MOTION is written in the usual region U by the write controller 17 together with the time information. As shown in FIG. 9, a port No. "1" is recorded in the usual region U as the value of the MOTION. Further, still image Nos. "1", "2", "3", "4", and "5" are recorded as the value of the MOTION together with the time information. The port No. of the MOTION is a number specifying the region in which a motion image is displayed.

In the present embodiment, when a moving image is displayed on the liquid crystal display device 4, the write controller 17 captures the moving image displayed on the liquid crystal display device 4 as a still image at an every predetermined time interval, and writes the captured still image in the usual region U as log information together with the time information indicating a time at which the still image has been captured. FIG. 10 shows an example of the data in the usual region U when the still image is written in the usual region U by the write controller 17 together with the time information. As shown in FIG. 10, a moving image No. "1" is recorded in the usual region U. Further, in the usual region U, still images obtained by capturing a moving image "still image data 1", "still image data 2", "still image data 3", "still image data 4", and "still image data 5" are recorded together with the time information. The still image data is recorded in a bitmap format.

Further, the DPF-ECU 1 has a function of reading apart or an entirety of the log information accumulated in the log information storage part 18. Therefore, the DPF-ECU 1 further includes a read controller 19. Herein, the read controller 19 is one embodiment of a read control part according to the present invention.

The read controller 19 reads a part or an entirety of the log information accumulated in the log information storage part 18 in accordance with the instruction from the input device 5. Specifically, the read controller 19 controls the read pointer RdP in the particular region P in accordance with the instruction from the input device 5, thereby reading log information recorded at an address indicated by the read pointer RdP (see FIG. 5). Further, the read controller 19 controls the read pointer RdP' in the usual region U in accordance with the instruction from the input device 5, thereby reading the log information recorded at the address indicated by the read pointer RdP' (see FIG. 5). The read controller 19 outputs the read log information to the drawing controller 13.

For example, if the instruction from the input device 5 indicates a read from a certain time, the read controller 19 controls the read pointers RdP, RdP', thereby reading the log information corresponding to the time after the certain time from the log information storage part 18. Further, for example, the instruction from the input device 5 indicates the read of only the MEN of the display identifiers, the read controller 19 controls the read pointer RdP, thereby reading the log information of the MEN recorded in the particular region P from the log information storage part 18. Thus, the read controller 19 can read a part or an entirety of the log information from the log information storage part 18 in accordance with the instruction from the input device 5.

The drawing controller 13 causes the liquid crystal display device 4 to reproduce a past information image based on a part or an entirety of the log information read by the read controller 19. Specifically, the drawing controller 13 generates an information image to be reproduced by the liquid crystal display device 4, referring to the image memory 14 and the command table 15, based on a part or an entirety of the log information read by the read controller 19. The drawing controller 13 causes the liquid crystal display device 4 to reproduce the generated information image. This enables the past information image displayed on the liquid crystal display device 4 to be reproduced on the liquid crystal display device 4. Consequently, what information image has been displayed on the liquid crystal display device 4 can be specified easily. The drawing controller 13 may cause another display device provided in an automobile, instead of the liquid crystal display device 4, to reproduce an information image. Further, the drawing controller 13 may cause the liquid crystal display device 4 to display time information simultaneously when causing the liquid crystal display device 4 to reproduce the past information image.

Since the past image information image displayed on the liquid crystal display device 4 can be reproduced, the information display system for a mobile object according to the present embodiment can be utilized, for example, in the following case. That is, when a traffic accident or a violation of regulations (traffic offence such as speeding) occurs, the information image immediately before the occurrence of the traffic offense or the violation of regulations is reproduced, whereby the cause for the occurrence of the traffic accident or the violation of regulations, or the evidence for the occurrence of the violation of regulations can be specified Further, the driving history, failure history, etc. of an automobile can be specified by reproducing a past information image at a time of selling/purchasing the automobile, and hence, an appropriate price of the automobile can be determined easily. Further, when a driver is heading for a certain place from home, the reproduction of the past information image captured when the driver is heading for the certain place from home can be utilized as a driving support for the operator. Further, the habit of a driving operation of the driver can be analyzed by reproducing the past information image. These application methods merely are examples, and the information display system for a mobile object according to the present embodiment can be utilized for various uses by reproducing the past information image displayed on the liquid crystal display device 4.

When the past information image is reproduced on the liquid crystal display device 4, the information image displayed on the liquid crystal display device 4 may not only be reproduced by an ordinary "reproduction" instruction in accordance with the instruction from the input device 5, but also be reproduced by a "high-speed reproduction" instruction or a "slow reproduction" instruction. In this case, the information image displayed on the liquid crystal display device 4 is reproduced rapidly or slowly compared with the ordinary reproduction operation. Further, the information image displayed on the liquid crystal display device 4 also can be subjected to operations such as "forwarding", "rewinding", and "pause", for example, as in the ordinary recording device in accordance with the instruction from the input device 5.

Further, after the past information image is reproduced on the liquid crystal display device 4, the log information corresponding to the reproduced information image may be deleted from the log information storage part 18 in accordance with the instruction from the input device 5. Further, for example, a part or an entirety of the log information may be protected so that a part or an entirety of the log information accumulated in the log information storage part 18 is not deleted from the input device 5 in accordance with the instruction from the input device 5.

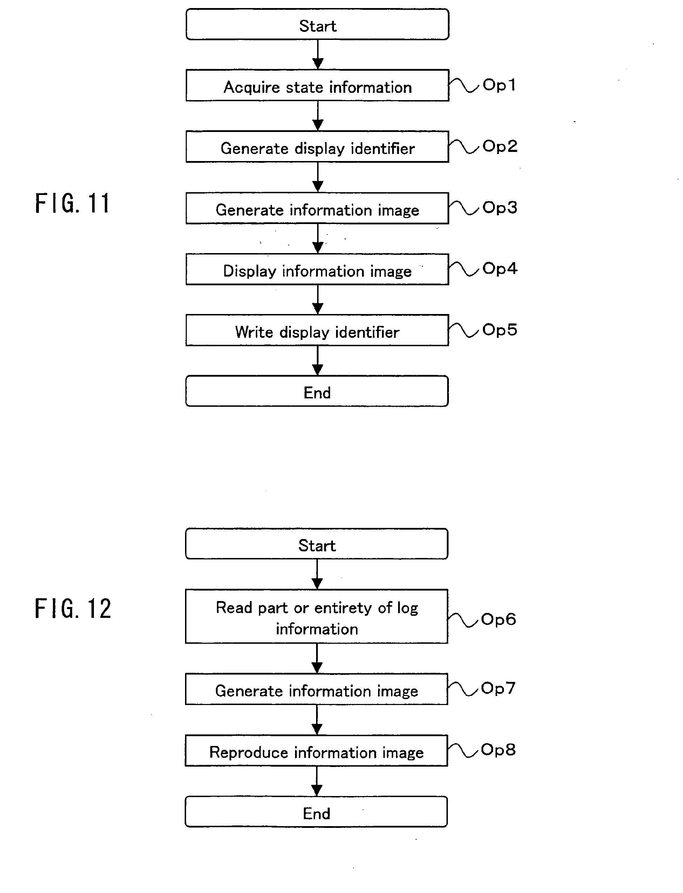

Next, the operation of the information display system for a mobile object according to the above configuration will be described with reference to FIGS. 11 and 12.

FIG. 11 is a flowchart illustrating an operation example of the information display system for a mobile object when the state information D is acquired via the in-car LAN2. More specifically, as shown in FIG. 11, the DPF controller 11 acquires the state information D indicating the state of each part of an automobile from the ECUs 3a, 3b, 3c, 3d, ... via the in-car LAN 2 at a predetermined period (Op 1). Then, the DPF controller 11 matches the state information D acquired in Op 1 with the determining table 12, thereby generating a display identifier specifying what information image should be generated in accordance with the state of the automobile at that time (Op 2). The display identifier includes four numbers: a MEN, a SEN, a ROTATE, and a MOTION.

Next, the drawing controller 13 generates an information image to be displayed on the liquid crystal display device 4, referring to the image memory 14 and the command table 15, based on the display identifier generated in Op 2 (Op 3). Then, the drawing controller 13 causes the liquid crystal display device 4 to display the generated information image. Thus, the liquid crystal display device 4 displays an information image (Op 4).

Every time the information image displayed on the liquid crystal display device 4 changes in Op 4, the write controller 17 writes the display identifier output from the DPF controller 11 in the log information storage part 18 as log information together with the time information indicating a time at which the information image has changed (Op 5). Consequently, the log information is accumulated in the log information storage part 18. When the liquid crystal display device 4 displays a moving image, the write controller 17 captures the moving image displayed on the liquid crystal display device 4 as a still image at an every predetermined time interval. In this case, the write controller 17 writes the captured still image in the log information storage part 18 as log information together with the time information indicating a time at which the still image has been captured.

FIG. 12 is a flowchart illustrating an operation example of the information display system for a mobile object when there is a read instruction from the input device 5. More specifically, as shown in FIG. 12, the read controller 19 reads a part or an entirety of the log information accumulated in the log information storage part 18 in accordance with the instruction from the input device 5 (Op 6). The drawing controller 13 generates an information image to be reproduced on the liquid crystal display device 4, referring to the image memory 14 and the command table 15, based on the part or the entirety of the log information read in Op 6 (Op 7). Then, the drawing controller 13 causes the liquid crystal display device 4 to reproduce the information image generated in Op 7. Thus, the past information image is reproduced on the liquid crystal display device 4 (Op 8).

As described above, according to the information display system for a mobile object according to the present embodiment, every time the information image displayed on the liquid crystal display device 4 changes, the write controller 17 writes the display identifier in the log information storage part 18 as the log information together with the time information indicating a time at which the information image has changed. Thus, the log information is accumulated in the log information storage part 18. More specifically, the state information D indicating the state of each part of an automobile is not accumulated as log information in the log information storage part 18, and a display identifier for displaying an information image in accordance with the situation of the automobile is accumulated as log information in the liquid crystal display device 4. Therefore, the past information image displayed on the liquid crystal display device 4 can be reproduced by reading the log information accumulated in the log information storage part 18. Consequently, what information image has been displayed on the liquid crystal display device 4 can be specified easily. Further, every time the information image displayed on the liquid crystal display device 4 changes, the write controller 17 writes a display identifier in the log information storage part 18 as log information together with the time information. Therefore, compared with the case where a change in the information image displayed on the liquid crystal display device 4 is recorded as a moving image in the recording device, the amount of information to be written in the log information storage part 18 can be suppressed.

The above embodiment shows one specific example of the embodiment of the present invention, and can be modified variously. Hereinafter, some main modified examples will be described.

### [Modified Example 1]

In the above embodiment, an example in which the log information storage part 18 is formed on the storage device in the DPF-ECU 1 has been described. In contrast, in Modified Example 1, the case where the log information storage part 18 is formed on a recording medium attachable/detachable with respect to the DPF-ECU 1 will be described.

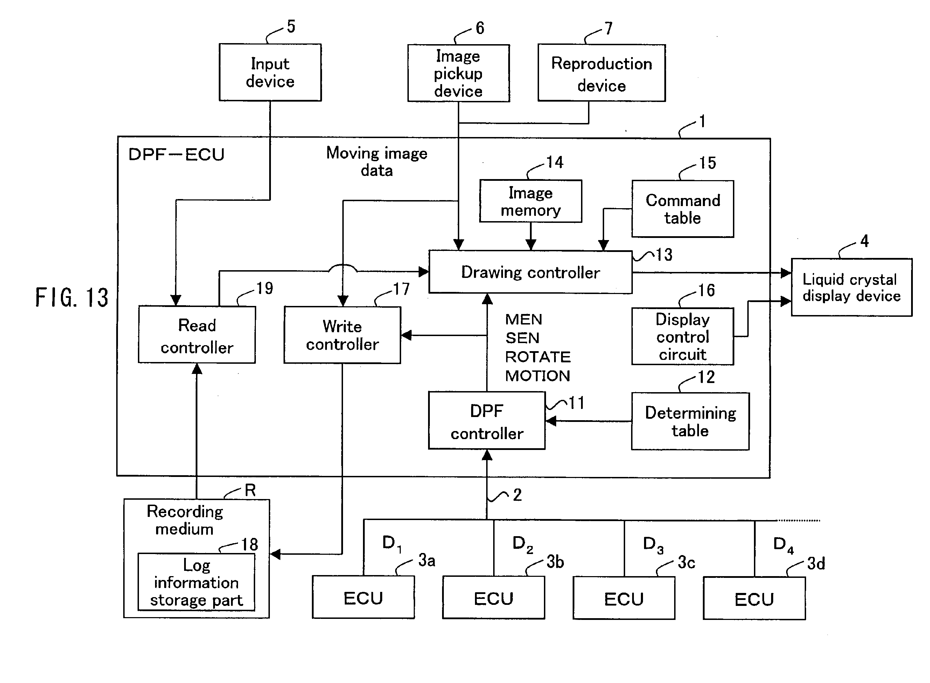

FIG. 13 is a block diagram showing an example of a functional configuration of the information display system for a mobile object according to Modified Example 1. As shown in FIG. 13, the log information storage part 18 is formed on a recording medium R attachable/detachable with respect to the DPF-ECU 1. Since, the log information storage part 18 is formed on the recording medium R, a recording medium of an appropriate size can be selected depending upon the amount of log information to be accumulated in the log information storage part 18. More specifically, if the recording medium R of a large size is selected, the write controller 17 can write a large amount of log information in the log information storage part 18.

The log information storage part 18 may be formed on a storage device in a web server or a file server on the Internet, in place of being formed on the recording medium attachable/detachable with respect to the DPF-ECU 1. In this case, it is not necessary to use a recording medium or a storage device in the DPF-ECU 1, and hence, the cost of the information display system for a mobile object can be reduced.

### [Modified Example 2]

In the above embodiment, the example in which the past information image displayed on the liquid crystal display device 4 is reproduced on the liquid crystal display device 4 has been described In contrast, in Modified Example 2, an example in which the past information image displayed on the liquid crystal display device 4 is reproduced on a reproduction device will be described.

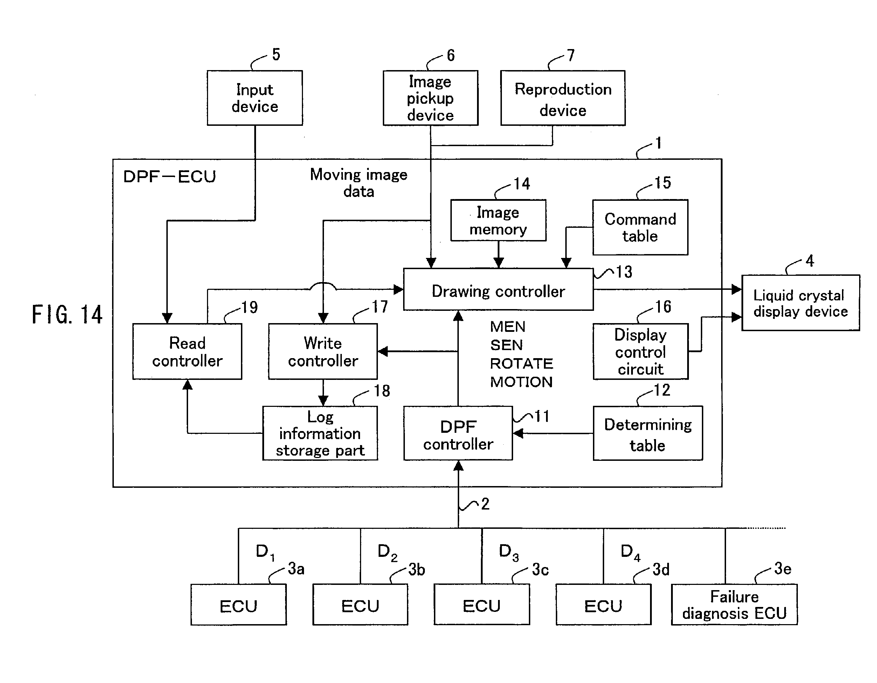

FIG. 14 is a block diagram showing an example of a functional configuration of the information display system for a mobile object according to Modified Example 2. More specifically, the information display system for a mobile object according to Modified Example 2 includes a failure diagnosis ECU 3e in addition to the information display system for a mobile object shown in FIG. 1. The failure diagnosis ECU 3e shown in FIG. 14 is an ECU attachable/detachable with respect to the information display system for a mobile object. In Modified Example 2, when the failure diagnosis ECU 3e is connected to the information display system for a mobile object, the failure diagnosis ECU 3e outputs requirement information for acquiring the log information accumulated in the log information storage part 18 to the DPF-ECU 1 via the in-car LAN 2. When receiving the requirement information output from the failure diagnosis ECU 3e, the DPF-ECU 1 reads the log information from the log information storage part 18 and outputs the read log information to the failure diagnosis ECU 3e via the in-car LAN 2. Thus, the log information accumulated in the log information storage part 18 is recorded in the failure diagnosis ECU 3e.

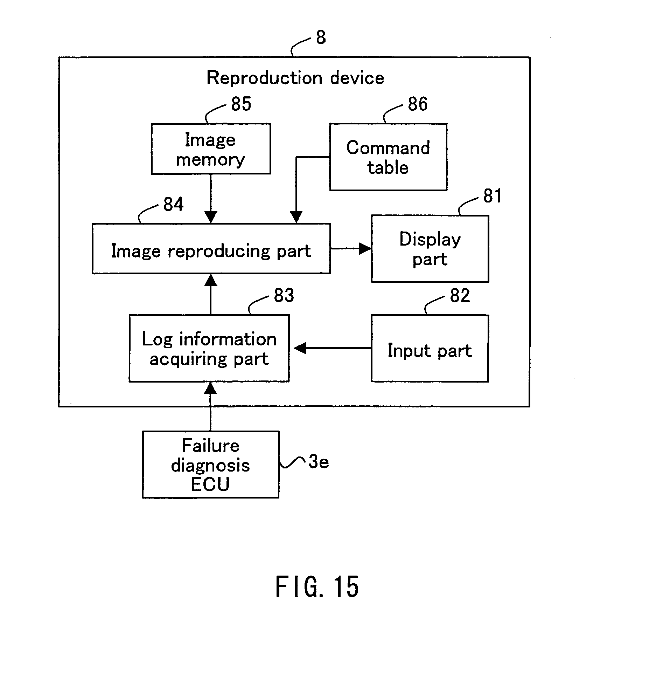

FIG. 15 is a block diagram showing an example of a functional configuration of the reproduction device. The reproduction device 8 is composed of, for example, a personal computer and a server machine. Further, the failure diagnosis ECU 3e shown in FIG. 5 is an ECU in which the log information accumulated in the log information storage part 18 is recorded. Further, the failure diagnosis ECU 3e shown in FIG. 15 is an ECU attachable/detachable with respect to the reproduction device 8.

The reproduction device 8 includes a display part 81, an input part 82, a log information acquiring part 83, an image reproducing part 84, an image memory 85, and a command table 86.

The display part 81 is composed of, for example, a liquid crystal display, an organic EL display, a plasma display, or a CRT display. The input part 82 is composed of, for example, a mouse, a ten key, a keyboard, a tablet, a touch panel, or a speech recognition device.

The log information acquiring part 83 acquires a part or an entirety of the log information recorded in the failure diagnosis ECU 3e in accordance with the instruction from the input part 82 when the failure diagnosis ECU 3e is connected to the reproduction device 8. That is, the log information acquiring part 83 acquires a part or an entirety of the log information accumulated in the log information storage part 18 of the DPF-ECU 1. The log information acquiring part 83 outputs the acquired log information to the image reproducing part 84.

The image reproducing part 84 generates an information image to be reproduced on the display part 81, referring to the image memory 85 and the command table 86, based on a part or an entirety of the log information acquired by the log information acquiring part 83. The image reproducing part 84 causes the display part 81 to reproduce the generated information image. Thus, the past information image displayed on the liquid crystal display device 4 can be reproduced on the display part 81. Consequently, what information image has been displayed on the liquid crystal display device 4 can be specified easily. The image memory 85 and the command table 86 are similar to the image memory 14 and the command table 15 in the DPF-ECU 1 shown in FIG. 14.

### [Modified Example 3]

The liquid crystal display device 4 is used in the above-mentioned embodiment. However, a target for applying the present invention is not limited to the information display system for a mobile object using the liquid crystal display device 4. As long as a portion displaying an information image in accordance with the state information D is a dot matrix type display device, any display device can be used.

Further, the target for applying the present invention is not limited to only the information display system for a mobile object to be incorporated in the instrument panel 101, as described above. For example, the present invention may be applied to an information display system for a mobile object using a display device of a type displaying or projecting an information image onto a window of a front surface of a driver's seat of an automobile or using a display device of a type to be mounted on a driver's body.

More specifically, the present invention is not limited to the above embodiment, and can be modified variously within the range shown in the claims. Embodiments obtained by combining technical means appropriately modified within the range shown in the claims also are included in the technical range of the present invention.

### Industrial Applicability

As described above, the present invention is useful as an active matrix substrate, a display device, and a method for inspecting an active matrix substrate, in which a short-circuit of wiring of an active matrix substrate can be detected exactly and an accidental omission of inspection is reduced with a simple configuration.

## Claims

1. A display control device connected to a dot matrix type display device, comprising:
a state information acquiring part that acquires state information indicating a state of each part of a mobile object at a predetermined period from each part of the mobile object;
an intermediate information generating part that generates intermediate information for displaying an information image in accordance with a situation of the mobile object on the display device based on the state information acquired by the state information acquiring part;
an image generating part that generates a layout image showing a layout of the information image and an element image showing at least one of the state of each part of the mobile object based on the intermediate information generated by the intermediate information generating part, combines the generated layout image with the generated element image to generate the information image, and causes the display device to display the generated information image; and
a write control part that writes the intermediate information in a log information storage part as log information together with time information indicating a time at which the information image has changed, every time the information image displayed on the display device changes.

2. The display control device according to claim 1, wherein the intermediate information contains a layout identifier specifying the layout image and an element image identifier specifying a display form of the element image, and
the write control part writes at least one of the layout identifier and the element image identifier in the log information storage part as log information.

3. The display control device according to claim 2, wherein the log information storage part includes a particular region in which, after the write control part once writes log information, the write control part cannot write the log information again, and a usual region in which the write control part can write log information repeatedly, and
the write control part writes the layout identifier in the particular region and the element image identifier in the particular region or the usual region.

4. The display control device according to any one of claims 1 to 3, wherein the image generating part acquires moving image data from a image pickup device provided in the mobile object or a reproduction device provided in the mobile object and causes the display device to display a moving image based on the acquired moving image data, and
the write control part captures the moving image displayed on the display device as a still image at an every predetermined time interval, and writes the captured still image in the log information storage part as log information together with time information indicating a time at which the still image has been captured.

5. The display control device according to any one of claims 1 to 4, further connected to an input device and further comprising a read control part that reads a part or an entirety of the log information accumulated in the log information storage part in accordance with an instruction from the input device,
wherein the image generating part causes the display device to reproduce the information image based on the part or the entirety of the log information read by the read control part.

6. A reproduction device comprising an input part and a display part and reproducing an image on the display part in accordance with an instruction from the input part, the reproduction device comprising:
a log information acquiring part that acquires a part or an entirety of the log information accumulated in the log information storage part according to any one of claims 1 to 4 in accordance with an instruction from the input part; and
an image reproducing part that causes the display part to reproduce the information image based on the part or the entirety of the log information acquired by the log information acquiring part.

7. An information display system for a mobile object, comprising: the display control device according to any one of claims 1 to 5; and a display device that displays an information image generated by the image generating part of the display control device.

8. The information display system for a mobile object according to claim 7, wherein the display device is a liquid crystal display device.

9. A module for a driver's seat to be attached to a periphery of a driver's seat of a mobile object, comprising the information display system for a mobile object according to claim 7 or 8.

10. A mobile object comprising the information display system for a mobile object according to claim 7 or 8, wherein the display device is attached to a position recognizable visually at least from the driver's seat.

11. The mobile object according to claim 10, wherein the mobile object is an automobile, and
the state information is transmitted from an ECU provided in each part of the automobile and collected in the display control device via an in-car network.
